# FASCICULE DE BREVET EUROPEEN

(11) **EP 1 915 595 B1**
(45) Date de publication et mention de la délivrance du brevet: **18.11.2009**
(21) Numéro de dépôt: 06794505.5
(22) Date de dépôt: 27.07.2006
(51) Int. Cl.: G01F 23/04

(54) **JAUGE DE CONTROLE DE NIVEAU D'HUILE POUR MOTEUR DE VEHICULE**
KRAFTFAHRZEUGÖLMESSSTABMITTEL
MOTOR VEHICLE OIL DIPSTICK MEANS

(30) Priorité: 10.08.2005 FR 0508482
(43) Date de publication de la demande: 30.04.2008
(73) Titulaire: RENAULT S.A.S., 92100 Boulogne Billancourt (FR)
(72) Inventeur: AMIRI, Zakaria, F-75017 Paris (FR); DOS SANTOS, Frédéric, F-92800 Puteaux (FR); GRIZAUD, Eric, F-78260 Acheres (FR); MONEREAU, Christophe, F-78600 Le Mesnil Le Roi (FR)
(86) Numéro de dépôt international: PCT/FR2006/050759
(87) Numéro de publication internationale: WO 2007/017607

(56) Documents cités:
- US-A1- 2004 143 985
- PATENT ABSTRACTS OF JAPAN vol. 2000, no. 13, 5 février 2001 (2001-02-05) & JP 2000 283823 A (NISSAN DIESEL MOTOR CO LTD), 13 octobre 2000 (2000-10-13)

## Description

La présente invention concerne les jauges de contrôle de niveau, notamment celles qui sont disposées sur le bloc moteur des véhicules en vue de contrôler le niveau d'huile à l'intérieur de celui-ci.

Plus précisément, elle concerne une jauge d'huile, notamment pour véhicule, comportant d'une part un guide de jauge tubulaire présentant à son extrémité supérieure une embouchure, et d'autre part une tige de contrôle de niveau comprenant un tronçon de mesure raccordé à un embout de fermeture du guide, ayant pour fonction la mesure du niveau d'huile ainsi que le remplissage d'huile moteur pour une utilisation client et après-vente.

Malgré la présence de systèmes de contrôle électroniques du niveau d'huile avec affichage d'alertes au tableau de bord, il est toujours souhaitable de conserver la possibilité de lire directement le niveau d'huile dans le moteur sur une jauge manuelle accessible dans le compartiment moteur.

Lorsque les contraintes de l'environnement obligent à allonger le guide de jauge et à adopter pour celui-ci un parcours non rectiligne, il est courant de recourir à des tiges de jauge de contrôle de niveau souples, faciles à insérer dans le guide. Un problème qui se pose alors est que l'augmentation de la longueur et le principe d'assemblage augmentent les tolérances et impactent la précision de lecture du niveau.

Ce que.l'on cherche donc à améliorer, c'est la précision de lecture du niveau d'huile lors du contrôle par la jauge à huile.

En effet, lors du contrôle du niveau, le référentiel pour la mesure, est la tige de jauge qui vient en butée dans le guide, donc au sommet du guide, là où il y a le maximum de dispersions dues à l'accumulation des tolérances dimensionnelles des pièces. Il y a donc un risque d'écart maximal de la lecture du niveau d'huile. C'est ce que décrit le brevet US 4 155 166 avec une jauge dont le référentiel se situe au niveau du bouchon. Ce bouchon est entouré d'un anneau en caoutchouc qui va permettre de maintenir la tige de jauge en place.

Une autre solution proposée pour résoudre ce problème consiste à utiliser des jauges de plus en plus courtes que l'on place le plus proche possible du niveau d'huile. Ces jauges ne sont donc pas faciles d'accès.

Une autre technique est de placer le référentiel de mesure le plus proche du niveau d'huile. C'est ce que propose le brevet Renault FR 2 851 652 qui décrit un guide jauge comportant une partie supérieure et une partie inférieure raccordées ensemble. La partie supérieure étant partiellement incurvée. Ce guide qui comporte un épaulement distant du carter moteur est réalisé sur un tube lié au carter moteur. Cet épaulement coopère avec des moyens de butée de la tige de contrôle de niveau. Ces moyens de butée permettent le centrage de la tige. Mais le cumul des erreurs dimensionnelles dues aux tolérances des pièces est important.

Le brevet US 4 174 574 propose un système où la partie inférieure du guide de jauge a un diamètre inférieur à celui de la partie supérieure, ces parties étant reliées par un joint entre le carter moteur et le réservoir d'huile. La différence de diamètre forme une butée qui va servir de référentiel. Ces deux caractéristiques ont pour but d'amortir les chocs subit par la jauge et ainsi d'éviter au liquide d'être trop dispersé. De plus la butée étant formée sur un tube introduit dans le carter, le dispositif présente les mêmes inconvénients que le brevet précédent.

Le brevet DE 4 122 288 décrit une jauge dont le guide de jauge comporte à son extrémité disposée au fond du carter d'huile, une pièce formant un arrêt pour la tige de la jauge. Lorsque la tige bute sur cette pièce le niveau peut alors être lu. Cette pièce joue le même rôle qu'une butée.

Le document US2004/143985 décrit une jauge selon le préambule de la revendication 1.

Ces différentes jauges même si elles permettent de réduire les erreurs de lecture du niveau liquide, ont leur référentiel encore situé dans des zones où la dispersion n'est pas la plus faible.

La présente invention a donc pour objet de supprimer un ou plusieurs des inconvénients de i'art antérieur.

Ce but est atteint en définissant une jauge de contrôle de niveau d'huile comportant un guide jauge tubulaire en plastique présentant à une extrémité une embouchure, et une tige de contrôle de niveau constituée d'une tige raccordée à une extrémité à un embout de fermeture, le guide jauge comportant un arrêt de butée jauge sur lequel vient s'appuyer une buté disposée sur la tige de contrôle de niveau lorsque celle-ci est insérée dans le guide **caractérisée en ce que** l'arrêt de butée est disposé dans le guide jauge au niveau de l'extrémité opposé à l'embouchure et a sa longueur prévue pour qu'il dépasse à l'extérieur du guide jauge lorsque la butée de la tige de contrôle de niveau vient en butée sur l'arrêt de butée.

Selon une autre caractéristique de l'invention le guide comporte à l'intérieur au niveau de l'extrémité emmanchée dans l'alésage du carter moteur un rebord circulaire interne.

Selon une autre caractéristique de l'invention l'embouchure comporte des moyens de fermeture rotatifs.

Selon une autre caractéristique de l'invention l'embout de fermeture est formé par un bouchon comportant des moyens de fermeture rotatifs de type ¼ de tour.

Selon une autre caractéristique de l'invention la distance entre le bouchon et la butée permet à la butée d'être en appui sur l'arrêt de butée lorsque le bouchon est posé sur l'embouchure sans être fermé, pour permettre le flambage de la tige.

Selon une autre caractéristique de l'invention la butée de la tige de contrôle de niveau est une sphère de diamètre inférieur au tube et supérieur au diamètre de l'arrêt de butée et disposée de façon à ce qu'elle vienne s'appuyer sur l'arrêt de butée lorsque la tige de niveau de contrôle est en appui dans le guide au niveau de l'extrémité opposée à l'embouchure.

Selon une autre caractéristique de l'invention l'arrêt de butée a la forme d'un cylindre, creux, dont le diamètre est adapté à celui du guide jauge de façon à pouvoir l'insérer à l'intérieur du guide jauge au niveau de l'extrémité emmanchée dans l'alésage du carter moteur, tout en laissant du jeu entre le diamètre externe de la butée et le diamètre interne du guide.

Selon une autre caractéristique de l'invention l'arrêt de butée comporte en son centre au moins trois épaulements, le nouveau diamètre formé par les épaulements étant suffisant pour permettre le passage de la tige de contrôle de niveau mais insuffisant pour le passage de la butée.

Selon une autre caractéristique de l'invention l'arrêt de butée comporte à une extrémité sur les bords du cylindre, au moins deux crochets lui permettant d'être clipsé sur le rebord circulaire du guide par un clipsage du type imperdable permettant un débattement longitudinal de l'arrêt de butée.

Selon une autre caractéristique de l'invention la longueur de l'arrêt de butée est prévue pour que l'arrêt de butée dépasse légèrement du guide afin d'être mis en contact avec le carter moteur par l'extrémité opposée à celle où le rebord est situé lorsque la butée de la tige de contrôle de niveau vient en butée sur l'arrêt de butée, et que les crochets ne soient pas en contact avec le rebord circulaire du guide.

L'invention concerne également un moteur de véhicule comportant au moins un carter moteur et une jauge de contrôle de niveau d'huile, la jauge comportant un guide jauge tubulaire en plastique présentant à une extrémité une embouchure , et une tige de contrôle de niveau constituée d'une tige raccordée à une extrémité à un embout de fermeture, le guide jauge comportant un arrêt de butée jauge sur lequel vient s'appuyer une buté disposée sur la tige de contrôle de niveau lorsque celle-ci est insérée dans le guide **caractérisée en ce que** l'arrêt de butée est disposé dans le guide jauge au niveau de l'extrémité opposé à l'embouchure et a sa longueur prévue pour qu'il dépasse à l'extérieur du guide jauge lorsque la butée de la tige de contrôle de niveau vient en butée sur l'arrêt de butée, de sorte que l'arrêt de butée vienne directement en appui sur le carter moteur.

Selon une autre caractéristique de l'invention le guide comporte à proximité de l'embouchure, sur un coté, une patte de fixation comportant un orifice permettant de fixer le guide sur un répartiteur d'air du moteur.

Selon une autre caractéristique de l'invention le guide a son extrémité opposée à celle de l'embouchure emmanchée dans un alésage du carter moteur, ladite extrémité comportant un joint torique pour assurer l'étanchéité avec le carter moteur.

L'invention, avec ses caractéristiques et avantages, ressortira plus clairement à la lecture de la description faite en référence aux dessins annexés donnés à titre d'exemples non limitatifs dans lesquels :
- la figure 1 est une vue en élévation des pièces constituant la jauge d'huile selon l'invention;
- la figure 2 est une vue en élévation de la jauge selon l'invention disposée sur le moteur du véhicule ;
- la figure 3 est une vue en élévation de la zone de référentiel de la jauge selon l'invention;
- la figure 4 est une coupe de profil de la zone d'insertion de la jauge au niveau du carter moteur ;

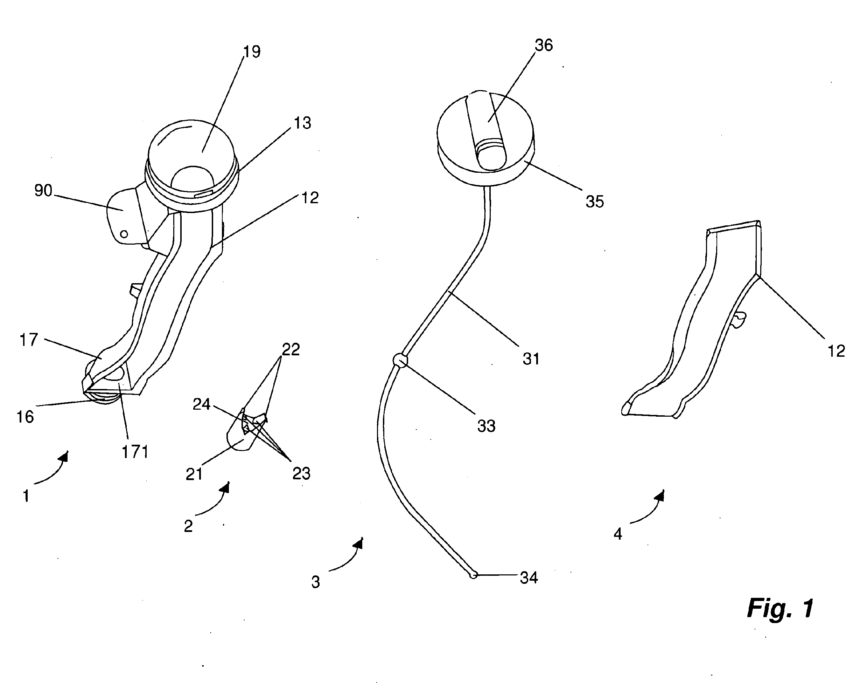

L'invention va à présent être décrite en référence aux figures 1 à 4.

Comme illustré sur la figure 1, la jauge (100) d'huile est composée d'un guide jauge, d'une tige (3) de contrôle de niveau portant un embout de fermeture (35) et d'un arrêt de butée (2).

Le guide jauge d'huile est donc une pièce tubulaire qui dans une variante peut être constituée de deux parties (1, 4). Ces deux parties (1, 4) étant assemblées et soudées ensemble par friction.

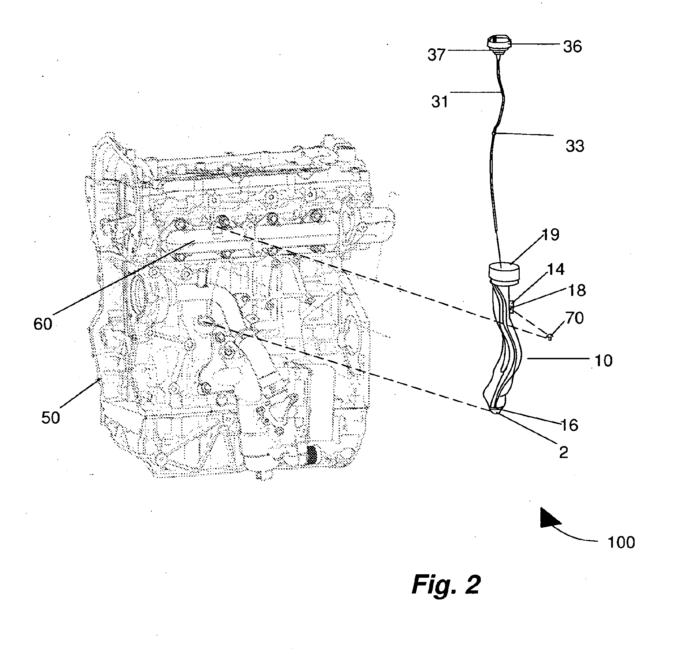

Le guide (10) comporte à une extrémité une embouchure (19) et sur un coté une patte de fixation (14) comportant un orifice (18) permettant de fixer le guide sur un répartiteur d'air (60) du moteur avec des moyens de fixation du type vis (70) illustrés sur la figure 2.

L'embouchure (19) comporte des moyens de fermeture rotatifs (13).

Le guide (10) est fixé au carter moteur (50), par emmanchement, par l'extrémité (17) opposée à celle de l'embouchure (19). Cette extrémité (17) comporte un joint torique (16) externe permettant d'assurer l'étanchéité entre le guide (10) et le carter moteur (50) comme illustré sur la figure 2.

Le guide (10) est partiellement incurvé (12) à proximité de l'embouchure (19) et comporte à l'intérieur au niveau de l'extrémité (17) emmanchée dans le carter moteur (50) un rebord circulaire (171).

Le guide peut aussi comporter des moyens de fixation (90) d'un câble ou d'une durite par exemple.

A une de ces extrémités la tige (31) comporte un embout (35) de fermeture du guide (10). Cet embout (35) est formé par un bouchon comportant sur une des ses deux faces des moyens de fermeture rotatifs (37) de type ¼ de tour, orientés vers la tige, coopérant avec les moyens de fermeture rotatifs (13) de l'embouchure (19) du guide (10) de jauge. Un joint torique peut être disposé au niveau des moyens de fermeture rotatifs (37) de type ¼ de tour dans le bouchon permettant une étanchéité entre le bouchon (35) et le guide (10). Sur la surface, opposée à celle où se trouvent les moyens de fermeture rotatif (37) de type ¼ de tour, l'embout (35) de fermeture comporte un rebord (36) centré au milieu de l'embout et dont la longueur est identique au diamètre de l'embout (35) de fermeture. Ce rebord (36) permet une prise en main plus facile du bouchon lors de l'ouverture et de la fermeture de la jauge.

Dans une variante de l'invention, les moyens de type rotatifs (37,13) peuvent être remplacés par des moyens de vissage.

Cette tige (31) comporte une butée (33). Cette butée (33) est une sphère (33) disposée de façon à ce qu'elle vienne s'appuyer sur l'arrêt de butée (2), qui se trouve dans le guide (10) de jauge, lorsque la tige (31) de niveau de contrôle est en appui sur l'embouchure du guide (10). La longueur de la tige permet à la butée d'être appuyée sur l'arrêt de butée même lorsque le bouchon n'est pas fermé mais juste posé sur l'embouchure (19) du guide (10), permettant à l'arrêt de butée de s'appuyer sur le carter moteur (50).

L'arrêt de butée (2) qui va donc servir à améliorer la mesure du niveau d'huile a la forme d'un cylindre (21), creux (24), dont le diamètre est adapté à celui du guide (10) jauge de façon a pouvoir l'insérer à l'intérieur du guide jauge au niveau de l'extrémité (17) emmanchée dans le carter moteur (50) tout en laissant un certain jeu entre le diamètre externe de l'arrêt de butée et le diamètre interne du guide. Cet arrêt de butée (2) comporte en son centre au moins trois épaulements (23) sur lesquels va s'appuyer la sphère (33). Le nouveau diamètre formé par les épaulements (23) étant suffisant pour permettre le passage de la tige (31) de contrôle de niveau.

L'arrêt de butée (2) comporte à une extrémité sur les bords du cylindre, au moins deux crochets (22). Ces crochets (22) permettent le clipsage de l'arrêt de butée avec le rebord circulaire interne du guide. Le clipsage est du type imperdable. Le jeu de l'arrêt de butée et le clipsage imperdable permettent à l'arrêt de butée de coulisser librement dans le guide jauge et aussi de se positionner correctement dans le cas ou le guide serait légèrement incliné par rapport à l'alésage (51) du carter moteur (50).

Cet arrêt de butée (2) est disposé dans le guide (10) jauge au niveau de l'extrémité (17), son extrémité opposée aux crochets (22) dépasse légèrement à l'extérieur du guide (10) et est en contact avec le carter moteur (50).

Lors de son utilisation le guide (10) jauge est donc emmanché dans l'alésage (51) du carter moteur (50), puis une fois fixé, on vient mettre la tige (31) de contrôle de niveau dans le guide (10) jauge et l'étanchéité est formée en fermant le bouchon (35) par un quart de tour. Le guide (10) est fixé sur le répartiteur d'admission (60) d'air grâce aux moyens de fixation (14) par un système de type vis (70), comme illustré sur la figure 2. L'arrêt de butée (2) qui dépasse du guide vient en appui sur le carter moteur (50). La butée, dont le diamètre est inférieur au diamètre du guide, mais supérieur au diamètre interne de l'arrêt de butée, vient donc en appui sur l'arrêt de butée.

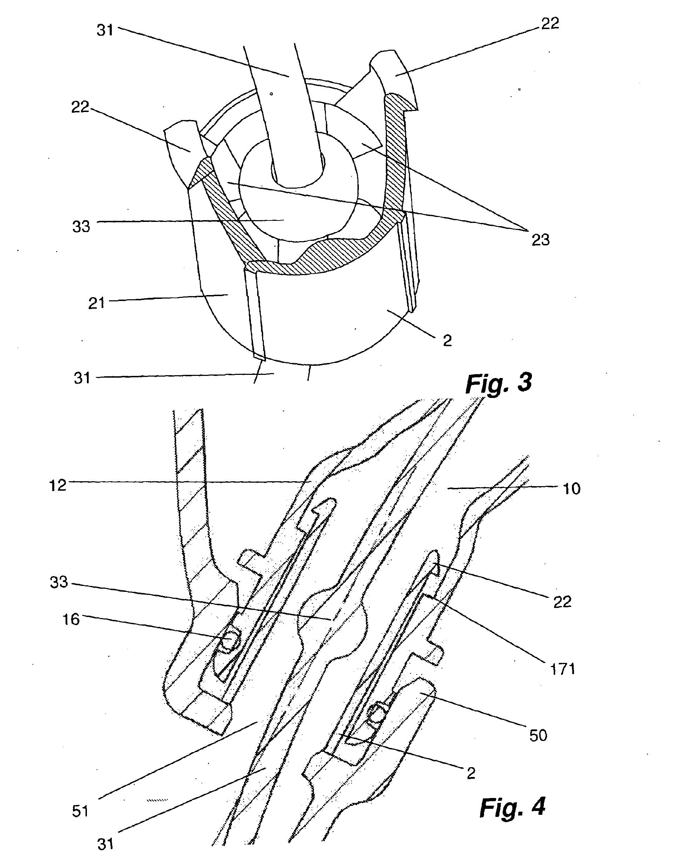

Comme illustré sur les figures 3 et 4, le principe de la solution est réalisé par le contact qui est formé entre la sphère (33) de la tige (31) de contrôle de niveau de jauge, l'arrêt de butée (2) jauge et le carter moteur (50). La tige (31) de contrôle de niveau solidaire du bouchon (35) vient en appui sur l'arrêt de butée (2) jauge lorsque celui-ci est vissé, ce qui provoque l'appui de l'arrêt de butée (2) jauge sur le carter moteur (50). C'est à ce moment là que l'on peut avoir la meilleure précision de la lecture du niveau d'huile, en effet, la chaîne de tolérances qui boucle le nombre de pièces qui interviennent dans le système comporte le plus petit nombre de maillon par rapport aux jauges standards. La mesure se fait donc avec une meilleure précision.

De plus le fait que le référentiel pour la mesure du niveau d'huile ne soit pas au niveau du sommet du guide (où l'on serre) mais au niveau de l'arrêt de butée (2) jauge diminue considérablement la dispersion.

Cette solution a un avantage lorsque l'on possède des parcours sinueux entre la zone d'appui de l'arrêt de butée (2) jauge sur le carter moteur (50) et le sommet du guide, qu'il suffit juste de bien estimer la courbure (12), le flambage du fil de jauge et déterminer la longueur du fil de jauge entre le bouchon et la butée en conséquence pour que l'arrêt de butée vienne a chaque fois en appui contre le carter.

Un autre avantage de cette solution technique, est que lorsqu'on fait son niveau d'huile, il n'est plus nécessaire de visser le bouchon (35). Il suffit juste d'enfoncer la tige (31) de contrôle de niveau dans le guide (10) jusqu'à pouvoir poser le bouchon (35) sur le sommet du guide et vu la différence de longueur entre la partie haute du guide et le fil de jauge, l'utilisateur assure a chaque fois que la jauge est sur son référentiel de prise du niveau. On peut ainsi lire son niveau d'huile sans accumulation d'erreur.

Il doit être évident pour l'homme du métier que la présente invention permet des modes de réalisation sous de nombreuses autres formes spécifiques sans l'éloigner du domaine d'application de l'invention comme revendiquée. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Jauge (100) de contrôle de niveau d'huile pour moteur de véhicule comportant un guide (10) jauge tubulaire en plastique présentant à une extrémité une embouchure (19), et une tige (3) de contrôle de niveau constituée d'une tige (31) raccordée à une extrémité à un embout (35) de fermeture, le guide (10) jauge comportant un arrêt de butée (2) jauge sur lequel vient s'appuyer une butée (33) disposée sur la tige (31) de contrôle de niveau lorsque celle-ci est insérée dans le guide (10) **caractérisée en ce que** l'arrêt de butée (2) est disposé dans le guide (10) jauge au niveau de l'extrémité opposé à l'embouchure (19) et a sa longueur prévue pour qu'il dépasse à l'extérieur du guide (10) jauge lorsque la butée (33) de la tige (31) de contrôle de niveau vient en butée sur l'arrêt de butée.

2. Jauge (100) selon la revendication 1 **caractérisée en ce que** le guide (10) comporte à l'intérieur au niveau de l'extrémité (17) emmanchée dans l'alésage (51) d'un carter moteur (50) un rebord circulaire (171) interne.

3. Jauge (100) selon la revendication 1 **caractérisé en ce que** l'embouchure (19) comporte des moyens de fermeture rotatifs (13).

4. Jauge (100) selon la revendication 1 **caractérisé en ce que** l'embout (35) de fermeture est formé par un bouchon (35) comportant des moyens de fermeture rotatif de type ¼ de tour (37).

5. Jauge (100) selon une des revendications 1à 4 **caractérisée en ce que** la distance entre le bouchon (35) et la butée (33) permet à la butée d'être en appui sur l'arrêt de butée lorsque le bouchon est posé sur l'embouchure sans être fermé, pour permettre le flambage de la tige.

6. Jauge (100) selon la revendication 1 **caractérisée en ce que** la butée (33) de la tige de contrôle de niveau est une sphère (33) de diamètre inférieur au tube et supérieur au diamètre de l'arrêt de butée et disposée de façon à ce qu'elle vienne s'appuyer sur l'arrêt de butée (2) lorsque la tige (31) de niveau de contrôle est en appui dans le guide (10) au niveau de l'extrémité (2) opposée à l'embouchure (19).

7. Jauge (100) selon la revendication 1 **caractérisée en ce que** l'arrêt de butée (2) a la forme d'un cylindre (21), creux (24), dont le diamètre est adapté à celui du guide (10) jauge de façon à pouvoir l'insérer à l'intérieur du guide (10) jauge au niveau de l'extrémité (17) emmanchée dans l'alésage (51) du carter moteur (50),tout en laissant du jeu entre le diamètre externe de la butée et le diamètre interne du guide.

8. Jauge (100) selon la revendication 7 **caractérisée en ce que** l'arrêt de butée (2) comporte en son centre au moins trois épaulements (23), le nouveau diamètre formé par les épaulements (23) étant suffisant pour permettre le passage de la tige (31) de contrôle de niveau mais insuffisant pour le passage de la butée (33).

9. Jauge (100) selon les revendications 1 et 7 **caractérisée en ce que** l'arrêt de butée (2) comporte à une extrémité sur les bords du cylindre (21), au moins deux crochets (22) lui permettant d'être clipsé sur le rebord circulaire (171) du guide (10) par un clipsage du type imperdable permettant un débattement longitudinal de l'arrêt de butée.

10. Moteur de véhicule comportant au moins un carter moteur et une jauge (100) de contrôle de niveau d'huile selon la recendication 1, de sorte que l'arrêt de butée (2) vienne directement en appui sur le carter moteur.

11. Jauge (100) selon la revendication 10 **caractérisée en ce que** le guide (10) comporte à proximité de l'embouchure (19), sur un coté, une patte de fixation (14) comportant un orifice (18) permettant de fixer le guide (10) sur un répartiteur d'air (60) du moteur.

12. Jauge (100) selon la revendication 10 **caractérisée en ce que** le guide (10) a son extrémité (17) opposée à celle de l'embouchure (19) emmanchée dans un alésage (51) du carter moteur (50), ladite extrémité (17) comportant un joint torique (16) pour assurer l'étanchéité avec le carter moteur (50).

## Claims

1. Vehicle engine oil dipstick (100) comprising a plastic tubular dipstick guide (10) having at one end an opening (19) and a dipstick shank (3) consisting of a shank (31) connected at one end to a closure endpiece (35), the dipstick guide (10) comprising a dipstick bump stop (2) on which an abutment (33) placed on the dipstick shank (31) rests when the latter is inserted in the guide (10), **characterized in that** the bump stop (2) is placed in the dipstick guide (10) at the opposite end from the opening (19) and has its length designed so that it protrudes outside the dipstick guide (10) when the abutment (33) of the dipstick shank (31) butts against the bump stop.

2. Dipstick (100) according to Claim 1, **characterized in that** the guide (10) comprises on the inside at the end (17) an inner circular rim (171) that is sleeve-fitted into the bore (51) of an engine crankcase (50).

3. Dipstick (100) according to Claim 1, **characterized in that** the opening (19) comprises rotary closing means (13).

4. Dipstick (100) according to Claim 1, **characterized in that** the closure endpiece (35) is formed by a stopper (35) comprising rotary closure means (37) of the ¼-turn type.

5. Dipstick (100) according to one of Claims 1 to 4, **characterized in that** the distance between the stopper (35) and the abutment (33) allows the abutment to rest on the bump stop when the stopper is placed on the opening without being closed, to allow the shank to buckle.

6. Dipstick (100) according to Claim 1, **characterized in that** the abutment (33) of the dipstick shank is a sphere (33) with a diameter that is smaller than the tube and greater than the diameter of the bump stop and placed so that it rests on the bump stop (22) when the dipstick shank (31) is resting in the guide (10) at the opposite end (2) from the opening (19).

7. Dipstick (100) according to Claim 1, **characterized in that** the bump stop (2) has the shape of a cylinder (21), hollow (24), whose diameter is suited to that of the dipstick guide (10) so that it is possible to insert it into the dipstick guide (10) at the end (17) that is sleeve-fitted into the bore (51) of the engine crankcase (50), while allowing clearance between the external diameter of the abutment and the internal diameter of the guide.

8. Dipstick (100) according to Claim 7, **characterized in that** the bump stop (2) comprises in its center at least three shoulders (23), the new diameter formed by the shoulders (23) being sufficient to allow the dipstick shank (31) to pass but insufficient to allow the abutment (33) to pass.

9. Dipstick (100) according to Claims 1 and 7, **characterized in that** the bump stop (2) comprises, at one end on the edges of the cylinder (21), at least two catches (22) allowing it to be clipped to the circular rim (171) of the guide (10) by a clipping of the captive type allowing a longitudinal travel of the bump stop.

10. Vehicle engine comprising at least one engine crankcase and one oil dipstick (100) according to Claim 1, so that the bump stop (2) rests directly on the engine crankcase.

11. Dipstick (100) according to Claim 10, **characterized in that** the guide (10) comprises, close to the opening (19), on one side, a fastening lug (14) comprising an orifice (18) making it possible to fasten the guide (10) to an air manifold (60) of the engine.

12. Dipstick (100) according to Claim 10, **characterized in that** the guide (10) has its end (17) opposite to that of the opening (19) sleeve-fitted into a bore (51) of the engine crankcase (50), said end (17) comprising an 0-ring (16) in order to ensure a seal with the engine crankcase (50).

## Patentansprüche

1. Ölmessstab (100) für einen Fahrzeugmotor, der eine rohrförmige Messstabführung (10) aus Plastik, die an einem Ende eine Mündung (19) hat, und eine Ölstand-Prüfstange (3) aufweist, die aus einer Stange (31) besteht, welche an einem Ende mit einem Verschlussaufsatz (35) verbunden ist, wobei die Messstabführung (10) einen Messstab-Anschlagstopp (2) aufweist, auf den sich ein auf der Ölstand-Prüfstange (31) angeordneter Anschlag (33) auflegt, wenn diese in die Führung (10) eingeführt wird, **dadurch gekennzeichnet, dass** der Anschlagstopp (2) in der Messstabführung (10) in Höhe des der Mündung (19) entgegengesetzten Endes angeordnet und seine Länge vorgesehen ist, damit er aus der Messstabführung (10) vorsteht, wenn der Anschlag (33) der Ölstand-Prüfstange (31) gegen den Anschlagstopp in Anschlag kommt.

2. Messstab (100) nach Anspruch 1, **dadurch gekennzeichnet, dass** die Führung (10) innen in Höhe des in die Bohrung (51) eines Motorgehäuses (50) eingesteckten Endes (17) eine innere ringförmige Randleiste (171) aufweist.

3. Messstab (100) nach Anspruch 1, **dadurch gekennzeichnet, dass** die Mündung (19) drehbare Verschlusseinrichtungen (13) aufweist.

4. Messstab (100) nach Anspruch 1, **dadurch gekennzeichnet, dass** der Verschlussaufsatz (35) von einem Deckel (35) gebildet wird, der Drehverschlusseinrichtungen vom Vierteldrehungstyp (37) aufweist.

5. Messstab (100) nach einem der Ansprüche 1 bis 4, **dadurch gekennzeichnet, dass** der Abstand zwischen dem Deckel (35) und dem Anschlag (33) es dem Anschlag ermöglicht, gegen den Anschlagstopp in Auflage zu sein, wenn der Deckel auf die Mündung aufgesetzt wird ohne geschlossen zu sein, um das Durchbiegen der Stange zu erlauben.

6. Messstab (100) nach Anspruch 1, **dadurch gekennzeichnet, dass** der Anschlag (33) der Ölstand-Prüfstange eine Kugel (33) ist, die einen geringeren Durchmesser als das Rohr und größer als der Durchmesser des Anschlagstopps hat und derart angeordnet ist, dass sie sich auf den Anschlagstopp (2) auflegt, wenn die Ölstand-Prüfstange (31) in der Führung (10) in Höhe des der Mündung (19) entgegengesetzten Endes (2) in Auflage ist.

7. Messstab (100) nach Anspruch 1, **dadurch gekennzeichnet, dass** der Anschlagstopp (2) die Form eines hohlen (24) Zylinders (21) hat, dessen Durchmesser an denjenigen der Messstabführung (10) angepasst ist, damit er in Höhe des in die Bohrung (51) des Motorgehäuses (50) eingesteckten Endes (17) ins Innere der Messstabführung (10) eingeführt werden kann und gleichzeitig ein Spiel zwischen dem Außendurchmesser des Anschlags und dem Innendurchmesser der Führung gelassen wird.

8. Messstab (100) nach Anspruch 7, **dadurch gekennzeichnet, dass** der Anschlagstopp (2) in seiner Mitte mindestens drei Schultern (23) aufweist, wobei der von den Schultern (23) geformte neue Durchmesser ausreichend ist, um den Durchgang der Ölstand-Prüfstange (31) zu erlauben, für den Durchgang des Anschlags (33) aber unzureichend ist.

9. Messstab (100) nach den Ansprüchen 1 und 7, **dadurch gekennzeichnet, dass** der Anschlagstopp (2) an einem Ende auf den Rändern des Zylinders (21) mindestens zwei Haken (22) aufweist, die es ihm ermöglichen, durch eine Schnappbefestigung vom unverlierbaren Typ auf der kreisförmige Randleiste (171) der Führung (10) festgeklemmt zu werden, die einen Längsausschlag des Anschlagstopps ermöglicht.

10. Fahrzeugmotor, der mindestens ein Motorgehäuse und einen Ölmessstab (100) nach Anspruch 1 aufweist, derart, dass der Anschlagstopp (2) direkt auf das Motorgehäuse in Auflage kommt.

11. Messstab (100) nach Anspruch 10, **dadurch gekennzeichnet, dass** die Führung (10) in der Nähe der Mündung (19) auf einer Seite eine Befestigungslasche (14) aufweist, die eine Öffnung (18) aufweist, die die Befestigung der Führung (10) auf einem Luftverteiler (60) des Motors erlaubt.

12. Messstab (100) nach Anspruch 10, **dadurch gekennzeichnet, dass** das der Öffnung der Mündung (19) entgegengesetzte Ende (17) der Führung (10) in eine Bohrung (51) des Motorgehäuses (50) eingesteckt ist, wobei das Ende (17) eine Ringdichtung (16) aufweist, um die Dichtheit mit dem Motorgehäuse (50) zu gewährleisten.
